# EUROPÄISCHE PATENTSCHRIFT

(11) **EP 0 633 281 B1**
(45) Veröffentlichungstag und Bekanntmachung des Hinweises auf die Patenterteilung: **10.06.1998**
(21) Anmeldenummer: 94109710.7
(22) Anmeldetag: 23.06.1994
(51) Int. Cl.: C08G 69/00, C08G 69/10, C08G 69/08, C08G 73/10

(54) **Verfahren zur Herstellung von Polysuccinimid und Polyasparaginsäure**
Process for the preparation of polysuccinimide and polyaspartic acid
Procédé de préparation de polysuccinimide et d'acide polyaspartique

(30) Priorität: 06.07.1993 DE 4322410
(43) Veröffentlichungstag der Anmeldung: 11.01.1995
(73) Patentinhaber: BAYER AG, 51368 Leverkusen (DE)
(72) Erfinder: Groth, Torsten, Dr., D-51061 Köln (DE); Joentgen, Winfried, Dr., D-50769 Köln (DE); Boehmke, Günter, Dr., D-51377 Leverkusen (DE); Schmitz, Gerd, D-51371 Leverkusen (DE); Traenckner, Hans-Joachim, Dr., D-51375 Leverkusen (DE)

(56) Entgegenhaltungen:
- EP-A- 0 256 366
- WO-A-93/23452
- GB-A- 2 246 786
- CHEMICAL ABSTRACTS, vol. 111, no. 6, 7. August 1989, Columbus, Ohio, US; abstract no. 40111, NIWA, TAKAKAZU ET AL 'Manufacture of thermosetting chemical- and heat-resistant maleamic acid polymers' & JP-A-63 270 735 (NIWA, TAKAKAZU;MOTOYAMA, YUKIO)

## Beschreibung

Die Erfindung betrifft ein Verfahren zur Herstellung von Polysuccinimid (PSI) und Polyasparaginsäure (PAS).

Die Herstellung und Verwendung von Polyasparaginsäure und ihrer Derivate ist seit langem Gegenstand zahlreicher Veröffentlichungen und Patente. So kann die Herstellung durch thermische Polykondensation von Asparaginsäure erfolgen (J. Org. Chem. 26, 1084 (1961)).

US-A 4 839 461 (= EP-A 0 256 366) beschreibt die Herstellung von Polyasparaginsäure aus Maleinsäureanhydrid, Wasser und Ammoniak. Maleinsäureanhydrid wird in wäßrigem Medium unter Zugabe von konzentrierter Ammoniak-Lösung in das Monoammoniumsalz umgewandelt. Das Monoammoniumsalz wird in der Schmelze bei Temperaturen von insbesondere 125 bis 140°C zu Polysuccinimid polymerisiert und durch Hydrolyse in PAS oder ein Salz davon überführt. Dabei können technisch schwer zu beherrschende Zähphasen durchlaufen werden. WO 93/23 452 gibt ebenfalls die Herstellung von Polyasparaginsäure aus Maleinsäureanhydrid, Wasser und Ammoniak an.

Aus US-A 4 590 260 ( = JP-A 1984(59)-60160) ist bekannt, Aminosäuren zusammen mit Derivaten der Äpfel-, Malein- und/oder Furmarsäure bei 100 bis 225°C einer Polykondensation zu unterwerfen. Gemäß US-A 4 696 981 werden bei derartigen Reaktionen Mikrowellen eingesetzt.

In DE-A 2 253 190 (= US-A 3 846 380) wird ein Verfahren zur Herstellung von Polyaminosäure-Derivaten, speziell Polyasparaginsäure-Derivaten, beschrieben. Danach werden neben Asparaginsäure auch Maleinsäure-Derivate (Monoammoniumsalz und Monoamid) durch thermische Polymerisation zur Herstellung der Zwischenstufe Polysuccinimid, das seinerseits in geeigneten Lösungsmitteln mit Aminen zu den gewünschten Derivaten umgesetzt werden kann, verwendet

Polyasparaginsäure läßt sich gemäß EP-A 256 366 (US-A-4 839 461) zur Entfernung von Verkrustungen durch Härtebildner des Wassers (Scale Inhibition und Scale Deposition Removal) einsetzen. Gemäß US-A-5 116 513 und EP-A-454 126 sind Polyasparaginsäure und ihre Salze wirksame Bestandteile von Waschmitteln und Düngemitteln.

Die Erfindung betrifft ein verbessertes Verfahren zur Herstellung von Polysuccinimid und Polyasparaginsäure durch Umsetzung von Fumarsäure, Maleinsäure oder Maleinsäureanhydrid mit Harnstoff, Isoharnstoff, Ammoniumcarbamid, Ammoniumhydrogencarbonat, Diammoniumcarbonat und Gemischen der vorgenannten Stoffe in einem Reaktor bei Temperaturen von vorzugsweise 100°C bis 300°C und Reaktionszeiten von vorzugsweise 0,5 min bis 300 min., wobei das erhaltene Polysuccinimid gegebenenfalls durch Hydrolyse zu Polyasparaginsäure bzw. ihren Salzen umgesetzt wird.

Eine bevorzugte Variante besteht darin, daß man Maleinsäureanhydrid bzw. Maleinsäure mit einem der oben beschriebenen stickstoffhaltigen Kohlensäurederivate und einem Metallcarbonat bzw. Metallhydrogencarbonat mischt und dieses Gemisch gegebenenfalls in Gegenwart eines Lösungsmittels diskontinuierlich oder kontinuierlich in einem geeigneten Reaktor bei vorzugsweise 100°C bis 300°C und Reaktionszeiten von vorzugsweise 0,5 - 300 min einer thermischen Polymerisation unterwirft.

Unter Polyasparaginsäure werden in der vorliegenden Erfindung sowohl die freie Polyasparaginsäure als auch ihre Salze verstanden.

Die erfindungsgemäß hergestellte Polyasparaginsäure enthält in einer bevorzugten Ausführungsform im wesentlichen wiederkehrende Einheiten folgender Struktur: 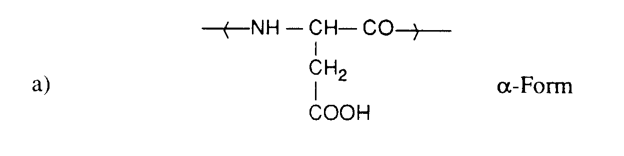 und

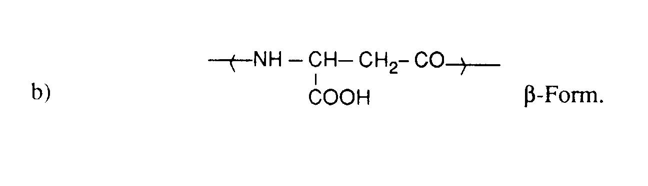

Die Analyse der chemischen Struktur erfolgt vorzugsweise mit ¹³C-NMR und nach Totalhydrolyse mit HPLC, GC und GC/MS.

Im unmittelbar bei der Polymerisation erhaltenen Produkt können neben dem Polyimid auch die oben angegebenen wiederkehrenden Einheiten a) und b) vorhanden sein.

Zusätzlich können durch geeignete Reaktionsführung und Wahl der Eddukte weitere wiederkehrende Einheiten enthalten sein, z.B.

Apfelsäure-Einheiten der Formel 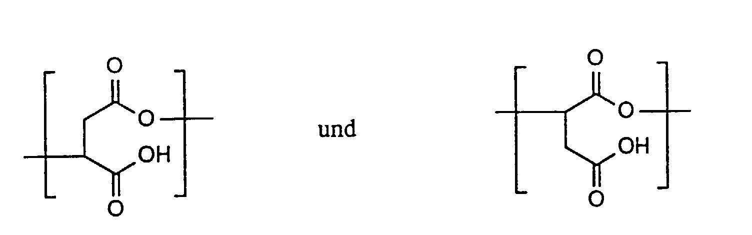 sowie Maleinsäure- und Fumarsäure-Einheiten der Formel

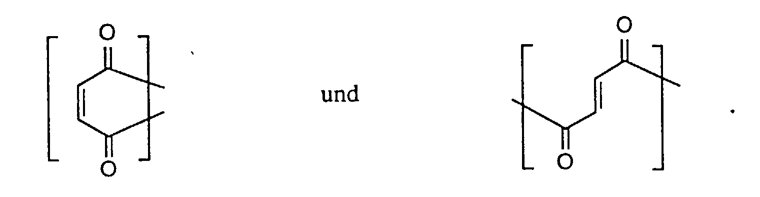

Werden neben dem Maleinsäureanhydrid und den oben genannten stickstoffhaltigen Kohlensäurederivaten Metallcarbonate oder Metallhydrogencarbonate als dritte Komponente eingesetzt, so können neben den oben genannten Strukturen noch teilneutralisierte Strukturen vorhanden sein. Die Menge an Metallcarbonat oder Metallhydrogencarbonat wird hierbei so gewählt, daß 10 % bis 90 % der im Polymer möglichen Carboxylgruppen abgesättigt sind. Verwendet werden können alle unter Normalbedingunen stabilen Metallcarbonate oder Hydrogencarbonate. Bevorzugt sind jedoch die Hydrogencarbonate oder Carbonate der Alkali- und Erdalkalimetalle einzusetzen. Besonders bevorzugte Kationen sind Li, Na, K, Mg, Ca und Ba. Die teilneutralisierten Polyasparaginsäurederivate zeigen gegenüber dem reinen Polysuccinimid eine deutlich verbesserte Löslichkeit in Wasser. Sie weisen neben wiederkehrenden Succinmideinheiten die oben angegebenen Einheiten a) und b) auf, die als Salz vorliegen können.

Die erfindungsgemäß einzusetzenden Maleinsäurederivate wie Maleinsäureanhydrid oder Maleinsäure werden mit den erfindungsgemäßen stickstoffhaltigen Kohlensäurederivaten wie Harnstoff. Isoharnstoff, Carbamidsäure, Ammoniumcarbamid, Ammoniumhydrogencarbonat, Diammoniumcarbonat und Gemischen davon so umgesetzt, daß das molare Verhältnis von Stickstoff zu Maleinsäurederivaten zwischen 0,5 und 2, bevorzugt zwischen 0,8 und 1,2 und besonders bevorzugt zwischen 0,95 und 1,05 beträgt.

Die für die Polymerisation benötigen Eduktgemische können in einem getrennten Prozeß hergestellt werden. So kann der Mischungsvorgang in Substanz in einem geeigneten Reaktor wie beispielsweise einem Schaufeltrockner erfolgen. Die Vermischung kann jedoch auch in einem geeigneten Lösungsmittel wie z.B. Wasser durchgeführt werden. Durch Simultandosierung der Mischungskomponenten können jedoch auch Mischungsschritt und Polymerisationsschritt in einem Reaktor verwirklicht werden. Der Polymerisationsschritt kann in geeigneten Reaktoren diskontinuierlich oder kontinuerlich durchgeführt werden. Diskontinuierlich einzusetzende Reaktoren sind z.B. Knetmaschinen oder Schaufeltrockner.

Eingesetzt werden können alle Hochviskosreaktoren, die eine Abführung des freiwerdenden Wasserdampfes erlauben, bevorzugt solche mit großen Reaktionsvolumina, bevorzugt auch solche mit kinematischer Selbstreinigung der produktberührten Flächen und ebenfalls bevorzugt solche mit Wellenbeheizung. Aus Gründen der Korrosionsfestigkeit werden bevorzugt Maschinen aus korrosionsfestem Material, z.B. Edelstahl eingesetzt.

Beispielhaft kann eine Schneckenmaschine vom Typ "Selfcleaner" der Fa. Lurgi eingesetzt werden:

Der "Selfcleaner" ist eine kontinuierlich selbstreinigende Gleichdrallschneckenmaschine mit Hohlwellen, die zur Temperierung von einem Wärmeträger durchströmt werden. Das zu behandelnde Produkt wird dabei von den rotierenden Hohlschnecken stetig durch den Trog des Gerätes gefördert. Oberhalb der Schneckenwellen befindet sich ein Gasraum zur Abführung der Brüden.

Der flüssige Wärmeträger strömt zuerst durch die Hohlwellen, tritt dann in der Nähe des Produktaustrittes in den letzten hohlen Gewindegang ein und durchströmt die hohlen Gewindegänge im Gegenstrom zum im Trog transportierten Produkt. Der entstehende Wasserdampf wird in Produktrichtung abgeführt.

Die Hohlschnecken beim "Selfcleaner" haben ein selbstreinigendes Rundprofil, so daß eine Schnecke die andere stetig reinigt. Das Gewinde der einen Hohlschnecke ragt bis auf ein gewisses Spiel, ganz in die Gewindelücke bis zu Hohlwelle der anderen Schnecke. Die Hohlwellen werden aus geformten Blechen geschweißt und in der Regel nicht mechanisch nachgearbeitet.

Im "Selfcleaner" werden vorzugsweise schwierig zu behandelnde Produkte verarbeitet, die bei Wärmebehandlung zum Ankleben und vor allem zum Ankrusten an den Heizflächen neigen. Das Produkt wird in den Gewindelücken der beiden Hohlschnecken in Form einer nicht geschlossenen Acht transportiert. Im Eingriffsbereich der Hohlschnecken wird das Produkt durch die Relativgeschwindigkeit der Hohlschnecken gemischt.

Erfindungsgemäß sind auch andere großvolumige Hochviskosreaktoren einzusetzen, beispielsweise der Typ "AP-Conti" der Fa. List, Schneckenwärmetauscher und auch Polymerschnecken sind ebenfalls erfindungsgemäß einzusetzen. Weitere erfindungsgemäß einzusetzende Reaktortypen sind der Bandreaktor (Bandtrockner) oder Walzentrockner.

Die Polymerisationstemperaturen betragen zwischen 100°C und 300°C, bevorzugt 140°C bis 250°C, besonders bevorzugt 160°C bis 220°C.

Die Eduktgemische haben in den oben beschriebenen Reaktoren eine Verweilzeit von 0,5 bis 300 Minuten, bevorzugt 1 bis 60 Minuten, besonders bevorzugt 2 bis 20 Minuten. Die Polymerisationsprodukte werden durch Lösen in einer Base bei 20 bis 95°C, bevorzugt 40 bis 70°C, besonders bevorzugt 50 bis 70°C in das entsprechende Polyasparaginsäuresalz überführt. Es ist auch möglich, durch Hydrolyse in Wasser bei 80 - 100°C oder durch Behandlung des Salzes mit Säuren oder sauren Ionenaustauschern bereits an dieser Stelle die freie Polyasparaginsäure zu erhalten. Das Produkt wird durch Sprühtrocknung als feines Pulver erhalten.

Das hergestellte Polymer zeigt in Abhängigkeit von den Reaktionsbedingungen z.B Verweilzeit und Temperatur der thermischen Polymerisation unterschiedliche Kettenlängen bzw. Molekulargewichte nach gelpermeationschromatographischen Analyse. (M_{w} = 500 bis 10 000, bevorzugt 1 000 bis 5 000, besonders bevorzugt 2 000 bis 4 000). Im allgemeinen liegt bei der erfindungsgemäß hergestellten Polyasparaginsäure der Anteil der β-Form bei mehr als 50 %, insbesondere mehr als 70 %.

Verwendung finden die erfindungsgemäßen Verbindungen, insbesondere als Dispergiermittel, Waschmittelzusatz, Sequestriermittel, scale inhibitor, Korrosionsinhibitor vor allen für Messing und als Mikrobizid.

### Beispiele

Die Polymerisationsreaktionen wurden in einem Hochviskosreaktor vom Typ Lurgi selfcleaner der Fa. Lurgi durchgeführt. Der "Selfcleaner" ist eine kontinuierlich selbstreinigende Gleichdrallschneckenmaschine mit Hohlwellen. Sowohl die Hohlwellen als auch der Gehäusemantel wird zur Temperierung von einem Wärmeträger durchströmt. Die Temperaturausführung ist folgendermaßen: Der flüssige Wärmeträger strömt zuerst durch die Hohlwellen, tritt dann in der Nähe des Produktaustrittes in den letzten hohlen Gewindegang ein und durchströmt die Gewindegänge im Gegenstrom zum im Trog transportierten Produkt. Das Gerät besitzt mehrere Ausgasungsdome, die bei Bedarf geöffnet und geschlossen werden können. Mit ihrer Hilfe kann ein beliebiger Wasser bzw- Wasserdampfgehalt im Reaktionsgemisch eingestellt werden. Die Hohlschnecken des "Selfcleaner" haben ein selbstreinigendes Rundprofil. Das Gewinde der einen Hohlschnecke ragt, bis auf ein gewisses Spiel, ganz in die Gewindelücke der anderen Schnecke. Das Spiel zwischen den beiden Hohlwellen einerseits und zwischen den Hohlwellen und dem Trog andererseits beträgt ca. 3 mm. Das verwendete Gerät hat folgende Maße:
L = 900 mm, ⌀ = 100 mm

### Beispiel 1

### Herstellung von Polysuccinimid aus Maleinsäureanhydrid und Ammoniumcarbonat

9 800 g Maleinsäureanhydrid (100,0 mol) und 4 800 g (50,0 mol) Ammoniumcarbonat wurden in einem Schaufeltrockner innig vermischt und anschließend kontinuierlich mit einer Dosierrate von 5 kg/h über eine Förderschnecke in den Mischungsteil der auf 172°C bis 174°C geheizten Schnecke gebracht. In der Mischungezone auf der heißen Oberfläche der Schneckenwellen wurde sofort ein dünner Schmelzfilm gebildet, der unter Entweichen von Reaktionswasser polymerisierte. Im weiteren Verlauf der Schnecke wurde das Polymer vollständig getrocknet und verließ die Schnecke als grobkörnige bis pulverige Masse. Die Verweilzeit auf der Schnecke betrug 5 min. man erhielt 9 500 g Produkt, das durch folgende Analysen charakterisiert wird. (Tabelle I)

### Beispiel 2

### Herstellung von Polysuccinimid aus Maleinsäureanhydrid und Ammoniumcarbonat (Simultandosierung)

Der in Beispiel 1 beschriebene Versuch wurde wiederholt mit dem Unterschied, daß Maleinsäureanhydrid und Ammoniumcarbonat über eine spezielle Dosiervorrichtung simultan im stöchiometrischen Verhältnis in den Mischungsteil der Schnecke gebracht werden. Die Dosierraten der Einzelkomponenten wurden so gewählt, daß sich wieder eine Dosiergeschwindigkeit für das Gemisch von 5 kg/h ergab. Die übrigen Bedingungen wurden wie in Beispiel 1 belassen. Stündlich wurden etwa 3 270 g Produkt, das folgende analytische Daten (Tabelle I) besaß, aus der Schnecke ausgetragen.

### Beispiel 3

### Herstellung von Polysuccinimid aus einer wässrigen Maleinsäure-Harnstoff Mischung

9 800 g Maleinsäureanhydrid (100 mol) werden bei 75°C in einer Stunde mit 6 500 g Wasser versetzt. Dann gibt man 3 300 g Harnstoff (55 mol) zu und rührt noch 30 min nach. Dieses Gemisch bildet bei 70°C eine homogene Lösung, welche mit einer Dosiergeschwindigkeit von 5 kg/h der auf 170°C erhitzten Schnecke zugeführt wird. Die Produkttemperatur beträgt unter diesen Bedingungen 162°C bis 165°C. Die bei der Reaktion entstanden leicht flüchtigen Anteile werden über einen Ausgasungsdom mit nachgeschaltetem Kondensator abgetrennt. Das abgeschiedene Wasser enthält noch geringe Anteile Maleinsäure und Fumarsäure und wird als Lösungsmittel in den Prozeß zurückgeführt. Bei diesem Versuch werden stündlich etwa 2500 g Produkt in Form eines schwach rosa gefärbten groben Pulvers erhalten. (Analytik: s. Tabelle I)

### Beispiel 4

### Herstellung einer teilneutralisierten Polyasgaraginsäure

11 600 g Maleinsäure (100 mol), 3 300 g Harnstoff (55 mol) und 1 550 g Natriumcarbonat-Monohydrat (12,5 mol) werden in einem Feststoffmischer bei Raumtemperatur innig vermischt. Das Gemisch wird mit einer Dosiergeschwindigkeit von 4 kg/h der auf 175°C erhitzten Schnecke zugeführt. Die Verweilzeit beträgt 10 min. Man erhält so stündlich 2 550 g Produkt als gelb-beiges grobes Pulver. (Analytik s. Tabelle I)

### Charakterisierung der erhaltenen Produkte

Zur Charakterisierung der Produkte wurden Säurezahl, Elementarzusammensetzung und Molekulargewichtsverteilung bestimmt. Weiterhin wurden anwendungstechnische Tests bezüglich der Sequestrier- und Dispergierwirkung des Produktes durchgeführt.

**Tabelle I**

| Beispiele | 1 | 2 | 3 | 4 |
|---|---|---|---|---|
| Elementarzusammensetzung | | | | |
| C [Gew.-%] | 46,0 | 46,6 | 45,2 | 44,8 |
| H [Gew.-%] | 3,8 | 3,6 | 4,2 | 3,1 |
| N [Gew.-%] | 13,5 | 14,4 | 14,8 | 14,2 |
| NH₄ [Gew.-%] | 1,0 | 0,8 | 0,7 | 1,2 |
| H₂O [Gew.-%] | 0,3 | 0,3 | 0,4 | 0,2 |
| Na [Gew.-%] | | | | 5,3 |

| Molmassenverteilung mit GPC | | | | |
|---|---|---|---|---|
| M_{w} | 3100 | 3050 | 3060 | 3080 |
| Säurezahl (mg(NaOH)/g) | 422 | 401 | 420 | 310 |

Anwendungstechnische Tests durchgeführt nach Überführung ins Na-Salz:

### Herstellung von Polyasparaginsäure-Na-Salz

Jeweils 30 g = ca. 0,28 mol des erhaltenen Polysuccinimids/Polyasparaginsäuregemischs wird in ca. 50 ml H₂O suspendiert und bei ca. 60°C mit 50 %iger Natronlauge bis zu einem pH-Wert von 8,5 gelöst. Die Lösung wird im Vakuum eingeengt und das erhaltene Polyasparaginsäure Na-Salz vollständig getrocknet. Man erhält ca. 38 g.

Anwendungstechnische Tests durchgeführt nach Überführung ins Na-Salz:

### a) Sequestrieren eines Tensides

### Prüfung der Trübungsintensität einer Alkylbenzolsulfonsäure-Na-Salz-Lösung in Leitungswasser (Gesamtwasserhärte: 14 Grad deutscher Härte)

1 ml 10 %ige Lösung eines für Waschmittel üblichen Tensides auf Basis einer Alkylbenzolsulfosäure (Marlon A 375) wird unter Zugabe 0,1 g PAS-Na-Salz mit Leitungswasser auf 100 ml aufgefüllt. Die entstandene Lösung hat eine Standstabilität von über drei Wochen. Ohne Zusatz von PAS-Na-Salz trübt sich die Lösung in wenigen Minuten.

### b) Dispergieren von Zinkoxid

0,3 g PAS-Na-Salz werden mit 10 g Zinkoxid in 200 ml Leitungswasser dispergiert. Die Dispersion wird in einen Meßzylinder überführt. Nach drei Stunden werden Proben aus unterschiedlichen Stellen des Meßzylinders entnommen und auf ihren Zinkoxidgehalt untersucht. Dabei wurde gefunden, daß der Zinkoxidgehalt infolge der guten dispergierenden Wirkung immer gleich ist. Weiterhin wurde die Sedimentationsstabilität nach 3 h und 24 h bestimmt. In beiden Fällen wurde praktisch keine Sedimentationsschicht am Boden des Meßzylinders festgestellt.

## Patentansprüche

1. Verfahren zur Herstellung von Polysuccinimid und Polyasparaginsäure durch Umsetzung von Fumarsäure, Maleinsäure oder Maleinsäureanhydrid mit Harnstoff, Isoharnstoff, Ammoniumcarbamid, Ammoniumhydrogencarbonat, Diammoniumcarbonat und Gemischen der vorgenannten Stoffe in einem Reaktor, wobei das erhaltene Poylsuccinimid gegebenenfalls durch Hydrolyse zu Polyasparaginsäure bzw. ihren Salze umgesetzt wird.

2. Verfahren nach Anspruch 1, dadurch gekennzeichnet, daß ein Zweiwellenextruder verwendet wird, der selbstreinigend ist und Hohlwellen aufweist, die zur Temperierung mit einem Wärmeträger durchströmt werden.

3. Verfahren nach wenigstens einem der vorhergehenden Ansprüche, dadurch gekennzeichnet, daß die Umsetzung bei 100°C bis 300°C durchgeführt wird.

4. Verfahren nach wenigstens einem der vorhergehenden Ansprüche, dadurch gekennzeichnet, daß man Maleinsäure oder Maleinsäureanhydrid mit Harnstoff, Isoharnstoff, Ammoniumcarbamid, Ammoniumhydrogencarbonat, Diammoniumcarbonat und Gemischen der vorgenannten Stoffe und einem Metallcarbonat bzw. Metallhydrogencarbonat mischt und dieses Gemisch in einem geeigneten Reaktor bei 100 bis 300°C und Reaktionszeiten von 0,5 bis 300 min einer thermischen Polymerisation unterwirft.

5. Verfahren nach wenigstens einem der vorhergehenden Ansprüche, dadurch gekennzeichnet, daß Maleinsäureanhydrid verwendet wird.

## Claims

1. Process for the preparation of polysuccinimide and polyaspartic acid by reaction of fumaric acid, maleic acid or maleic anhydride with urea, isourea, ammonium carbamide, ammonium bicarbonate, diammonium carbonate or a mixture of the abovementioned substances in a reactor, the resulting polysuccinimide being converted, if appropriate, into polyaspartic acid or a salt thereof by hydrolysis.

2. Process according to Claim 1, characterized in that a twin-shaft extruder which is self-cleaning and has hollow shafts through which a heat transfer medium flows for temperature control is used.

3. Process according to at least one of the preceding claims, characterized in that the reaction is carried out at 100°C to 300°C.

4. Process according to at least one of the preceding claims, characterized in that maleic acid or maleic anhydride is mixed with urea, isourea, ammonium carbamide, ammonium bicarbonate, diammonium carbonate or a mixture of the abovementioned substances and a metal carbonate or metal bicarbonate and this mixture is subjected to thermal polymerization at 100 to 300°C over a reaction time of 0.5 to 300 minutes in a suitable reactor.

5. Process according to at least one of the preceding claims, characterized in that maleic anhydride is used.

## Revendications

1. Procédé de préparation du polysuccinimide et de l'acide polyaspartique par réaction de l'acide fumarique, de l'acide maléique ou de l'anhydride maléique avec l'urée, l'isourée, le carbamate d'ammonium, le bicarbonate d'ammonium, le carbonate diammonique ou un mélange de ces substances dans un réacteur, le polysuccinimide obtenu étant éventuellement converti par hydrolyse en acide polyaspartique ou l'un de ses sels.

2. Procédé selon la revendication 1, caractérisé en ce que l'on utilise une extrudeuse à deux vis auto-nettoyante et comportant des aubes creuses au travers desquelles un agent de transfert de la chaleur passe pour réglage de la température.

3. Procédé selon au moins une des revendications qui précèdent, caractérisé en ce que la réaction est réalisée à des températures de 100 à 300°C.

4. Procédé selon au moins une des revendications qui précèdent, caractérisé en ce que l'on mélange l'acide ou l'anhydride maléique avec l'urée, l'isourée, le carbamate d'ammonium, le bicarbonate d'ammonium, le carbonate diammonique ou un mélange de ces substances et un carbonate ou bicarbonate métallique et on soumet ce mélange à polymérisation à la chaleur dans un réacteur approprié à des températures de 100 à 300°C avec des durées de réaction de 0,5 à 300 min.

5. Procédé selon au moins une des revendications qui précèdent, caractérisé en ce que l'on utilise de l'anhydride maléique.
